# FASCICULE DE BREVET EUROPEEN

(11) **EP 2 240 616 B1**
(45) Date de publication et mention de la délivrance du brevet: **30.10.2019**
(21) Numéro de dépôt: 08865401.7
(22) Date de dépôt: 15.12.2008
(51) Int. Cl.: C22C 16/00, C21D 7/06, C21D 10/00, G21C 3/20, C22F 1/00, G21C 7/10, G21C 21/02, G21C 21/18

(54) **PROCÉDÉ DE TRAITEMENT SUPERFICIEL D'UN ALLIAGE DE ZIRCONIUM OU DE HAFNIUM, ET COMPOSANT AINSI TRAITÉE.**
VERFAHREN ZUR OBERFLÄCHENBEHANDLUNG EINER ZIRCONIUM- ODER HAFNIUMLEGIERUNG UND SO VERARBEITETES BAUTEIL
METHOD FOR THE SURFACE TREATMENT OF A ZIRCONIUM OR HAFNIUM ALLOY AND COMPONENT THUS PROCESSED

(30) Priorité: 21.12.2007 FR 0760239
(43) Date de publication de la demande: 20.10.2010
(73) Titulaire: FRAMATOME, 92400 Courbevoie (FR)
(72) Inventeur: HERTZ, Dominique, F-69110 Sainte Foy Les Lyon (FR)
(74) Mandataire: Lavoix
(86) Numéro de dépôt international: PCT/FR2008/052302
(87) Numéro de publication internationale: WO 2009/081013

(56) Documents cités:
- WO-A-02/10462
- WO-A-02/10463
- WO-A-2004/007788
- FR-A- 2 157 640
- FR-A- 2 425 702
- FR-A- 2 689 431
- JP-A- 8 001 514
- US-A- 4 473 410
- L. ZHANG, Y. HAN, J. LU: NANOTECHNOLOGY, vol. 19, 20 mars 2008 (2008-03-20), pages 1-7, XP002492522 uk
- VOLKER SCHULZE: "Procedures of Mechanical Surface Treatments" MODERN MECHANICAL SURFACE TREATMENT, 2006, pages 9-24, XP002492523 DE
- TAO N R ET AL: "Surface nanocrystallization of iron induced by ultrasonic shot peening" NANOSTRUCTURED MATERIALS, ELSEVIER, NEW YORK, NY, US, vol. 11, no. 4, 1 juin 1999 (1999-06-01), pages 433-440, XP004178991 ISSN: 0965-9773

## Description

L'invention concerne le domaine des alliages de zirconium, utilisés notamment comme composants des assemblages de combustible pour réacteurs nucléaires à eau légère, en particulier comme gaines de combustible, ou tubes-guides de structure, ou éléments plats de ces mêmes assemblages tels que des feuillards ou plaquettes de grilles. Elle concerne également les alliages de hafnium, utilisés notamment pour constituer des barres de contrôle dans les réacteurs à eau légère par exemple en tant que composants absorbant les neutrons des grappes de commande pour réacteurs à eau pressurisée ou des croix de contrôle pour réacteurs à eau bouillante.

On rappelle que l'assemblage de combustible d'un réacteur nucléaire à eau légère du type à eau pressurisée (PWR) ou à eau bouillante (BWR) se compose notamment d'un faisceau de « crayons », c'est-à-dire de gaines renfermant des pastilles à base d'oxyde d'uranium constituant le combustible, et de diverses pièces de structure assurant le positionnement et le maintien mécanique des crayons et leur manutention (tubes-guides, grilles de maintien, ressorts, boîtier, canal d'eau...). Les gaines et au moins certains des éléments de structure sont réalisés en alliage de zirconium, cet élément ayant l'avantage de laisser passer les neutrons, et aussi de pouvoir présenter les propriétés mécaniques et la résistance à la corrosion nécessaires dans les milieux concernés lorsque les éléments d'alliage et leurs teneurs sont convenablement choisis.

Parmi les alliages de zirconium classiquement utilisés, on peut citer de manière non exhaustive :
- les alliages dits « Zircaloy » qui contiennent notamment de l'étain, du fer, du chrome, de l'oxygène, et, pour certains d'entre eux, du nickel ;
- les alliages Zr-Nb tels que le M5® de la société AREVA NP, qui contiennent environ de 1 à 2,5% en poids de niobium, voire également d'autres éléments, notamment tels que de l'oxygène, du fer et de l'étain.

Ces compositions ne sont données qu'à titre indicatif, en tant que rappel d'un des contextes privilégiés de l'invention, celle-ci étant applicable aux alliages de zirconium de toutes compositions précises, et également aux alliages de hafnium comme on le verra plus loin.

De même on rappelle que pour régler la réactivité du cœur du réacteur nucléaire pendant le fonctionnement du réacteur, on déplace les éléments absorbant les neutrons à l'intérieur de (réacteurs PWR) ou entre (réacteurs BWR) certains assemblages du cœur en position verticale, soit dans le sens de l'insertion, soit dans le sens de l'extraction, de manière à introduire une longueur plus ou moins importante des parties absorbantes dans les assemblages du cœur. Les barres de contrôle pour réacteurs à eau pressurisée sont constituées d'un support généralement désigné par le terme « araignée » et d'un faisceau de crayons absorbants susceptibles de coulisser à l'intérieur des tubes-guides de l'assemblage. Elles sont appelées grappes de commande.

Un crayon absorbant peut être constitué d'un tube de hafnium renfermant éventuellement un autre matériau absorbant, voire d'un barreau plein en hafnium.

Les barres de contrôle d'un réacteur à eau bouillante se présentent généralement sous la forme de plaques assemblées sous forme de croix et susceptibles de coulisser entre les boîtiers des assemblages de combustible. Les plaques peuvent être en un matériau absorbant (hafnium), ou être en acier et comporter des inserts de matériaux absorbants (par exemple le B₄C ou le hafnium). Elles sont généralement appelées croix de contrôle.

Le hafnium est le métal absorbant les neutrons mis en œuvre à l'origine pour les grappes de commande des réacteurs civils et navals. S'il a ensuite été réservé aux usages militaires, il est aujourd'hui de plus en plus employé comme absorbant neutronique dans les réacteurs à eau légère, sa disponibilité ayant beaucoup augmenté avec le développement des alliages de zirconium. Le hafnium est, en effet, présent à raison de 2 à 4% dans les minerais de zirconium, et doit être séparé de celui-ci du fait de sa grande absorption neutronique. Il constitue donc un sous-produit de la fabrication des alliages de zirconium, et son utilisation dans les grappes de commande des réacteurs permet de le rentabiliser.

Le hafnium présente l'avantage sur d'autres matériaux absorbants de disposer d'une excellente compatibilité avec le fluide primaire, il peut donc être utilisé sans gainage. Il peut être utilisé pur ou faiblement allié avec des éléments tels que l'étain et/ou l'oxygène pour augmenter ses caractéristiques mécaniques, le fer, le chrome et/ou le niobium pour augmenter sa résistance à la corrosion, et le molybdène pour augmenter sa résistance à l'usure. Enfin du fait des difficultés à séparer le hafnium et le zirconium, il peut comporter jusqu'à 2,5% de zirconium résiduel, de préférence au maximum 1 %.

Tant pour les alliages de zirconium que pour le hafnium et ses alliages, les propriétés chimiques (telles que la résistance aux divers types de corrosion par l'eau du circuit primaire susceptibles de survenir selon les conditions d'utilisation de l'alliage : corrosion nodulaire, corrosion généralisée, corrosion sous contrainte, corrosion sous irradiation...) et mécaniques (résistance à la traction, limite élastique, résistance au fluage, résistances au frottement et à l'usure...) désirées sont notamment obtenues par le couplage entre le choix des éléments d'alliage et de leurs teneurs et le choix des traitements thermiques et thermomécaniques subis par le lingot d'alliage lors de la fabrication de l'élément, tels que des filages, des laminages et/ou des étirages, des trempes, des recuits, des polissages ou des finitions de surface diverses.

La corrosion d'une gaine en alliage de zirconium se traduit par exemple par la formation d'une couche de zircone ZrO₂. Elle induit une perte de masse du métal, donc une diminution du diamètre extérieur de la gaine métallique, et aussi une importante modification de ses caractéristiques thermiques puisque la zircone est dix fois moins conductrice que le métal de base. Cette oxydation se traduit aussi par la formation d'hydrogène, dont une partie diffuse dans la gaine et forme des hydrures qui la fragilisent. Egalement, elle modifie les propriétés de frottement de la surface de la gaine. De plus, elle modifie les propriétés de résistance à l'usure de la surface de la gaine. En outre elle modifie les sites de nucléation des dépôts cristallisant à partir du fluide caloporteur (dépôts appelés traditionnellement « CRUD», acronyme de Chalk River Unidentified Deposit) et peut provoquer une augmentation de la quantité de ces dépôts. Elle dégrade aussi les conditions de frottement du fluide sur la surface, ce qui a un effet dommageable sur les pertes de charge de l'assemblage. Enfin elle modifie la nucléation de bulles de vapeur, et donc le comportement thermo-hydraulique lors des échanges entre le crayon et le fluide caloporteur.

Lors des opérations de fabrication et de montage des assemblages de combustible des défauts superficiels, tels que des rayures ou des microdéformations locales, sont créés sur les gaines engendrés notamment par les frottements subis par les crayons de combustible lors de leur insertion dans le squelette de l'assemblage de combustible. Ces défauts superficiels initiaux peuvent exacerber une dégradation ultérieure de la tenue en corrosion, voire en usure.

Des dégradations peuvent aussi se manifester en service au contact du crayon et de ses éléments de support dans les grilles, ainsi que du fait de corps migrants qui s'ancrent dans les grilles et flagellent le gainage. En effet, lors du fonctionnement du réacteur nucléaire, l'eau de refroidissement, qui circule avec une vitesse ascendante importante dans le cœur, provoque des mouvements oscillatoires de faible amplitude des crayons de combustible nucléaire à l'intérieur des grilles-entretoises et des éventuels corps étrangers coincés dans la structure de l'assemblage. Ce phénomène, appelé « fretting », va conduire à des frottements entre les crayons de combustible nucléaire et les parties de contact qui peuvent provoquer une usure des gaines des crayons de combustible nucléaire. Cette usure pourrait entraîner un percement des gaines des crayons de combustible, et donc un relâchement de gaz et de matières radioactifs dans l'eau du circuit primaire, pouvant conduire à l'arrêt du réacteur pour déchargement prématuré des assemblages de combustible comportant des crayons défectueux. Par ailleurs lors du percement de la gaine, l'hydrogène généré par radiolyse de l'eau du circuit primaire qui s'introduit à l'intérieur du crayon provoque une hydruration massive de la gaine pouvant conduire à sa rupture par fragilisation.

Un phénomène de fretting similaire existe au niveau des inserts lorsque la croix de contrôle BWR est constituée de plaques de structure généralement en acier, enserrant des inserts en matériau absorbant. L'usure de la couche d'oxyde superficielle de l'insert en hafnium permet son hydruration et peut conduire à la déformation de la croix de contrôle du fait du gonflement du hafnium sous l'effet de l'hydruration. Celle-ci peut conduire à une augmentation du volume du matériau de 15%. Une telle déformation est inacceptable car elle peut induire une augmentation de la durée d'insertion de la croix de contrôle, voire son coincement.

Par ailleurs les tubes-guides de l'assemblage de combustible, réalisés eux aussi en alliage de zirconium, sont exposés à l'usure par frottement ou par fretting sur les crayons des grappes de commande et vice-versa. Une telle usure des tubes-guides réduit l'épaisseur de métal, éventuellement jusqu'au percement, ce qui risque d'entraîner des perturbations dans la circulation du fluide caloporteur et des affaiblissements mécaniques dommageables en service ou en manutention inter-cycle. L'usure du crayon de grappe ou de la croix de contrôle, se révèle tout aussi dommageable, l'affaiblissement mécanique pouvant conduire à une rupture du composant concerné.

La gaine du crayon de combustible est la première barrière de confinement des produits de fission, les autres barrières étant constituées par la cuve du réacteur et son enceinte en béton.

En fonctionnement normal (situations dites de classe 1) et incidentel (situations dites de classe 2), l'étanchéité de la gaine vis-à-vis des produits de fission doit donc être garantie.

Lors d'un transitoire de puissance correspondant à une situation de classe 2, la puissance atteinte localement dans le combustible peut être deux à trois fois supérieure à la puissance nominale. Cette augmentation rapide de puissance entraîne une dilatation importante des pastilles. La dilatation thermique des pastilles l'emportant sur celle de la gaine, il en résulte une mise en traction de la gaine par les pastilles et une augmentation des contraintes en surface interne de la gaine, jusqu'à un niveau qui peut dépasser la limite élastique du matériau constituant la gaine, provoquant ainsi l'endommagement de la gaine. Par ailleurs, cette sollicitation mécanique a lieu en présence d'un environnement chimique agressif dû aux produits de fission, tels que l'iode, dégagés par le combustible pendant le transitoire de puissance. On parle alors d'Interaction Pastille Gaine (IPG), phénomène qui peut conduire à la rupture de la gaine.

Or, une telle rupture de la gaine n'est pas admise pour des raisons de sûreté, puisqu'elle pourrait conduire à la libération de produits de fission dans le circuit primaire du réacteur.

On peut penser à tenter de résoudre ces différents problèmes en pratiquant des traitements de surface du composant concerné. Mais un risque est que lors de ces traitements, on soit contraint de porter le composant à une température relativement élevée, qui dégraderait la structure métallurgique interne et les propriétés mécaniques du composant obtenues à la suite du processus de fabrication.

JP8001514 divulgue un procédé de traitement superficiel d'au moins une partie d'un composant en alliage de zirconium caractérisé en ce qu'il comporte au moins une opération de nanostructuration d'une couche superficielle de l'alliage Par ailleurs, il n'est pas toujours souhaitable de traiter la totalité de la surface des composants. Certaines zones doivent, par exemple, être épargnées pour permettre un soudage ultérieur. Or, il n'est pas toujours aisé, lors de la réalisation du traitement de surface, de protéger les zones à épargner. Le masquage des zones à épargner doit être étanche, le matériau protecteur risque de polluer le matériau à protéger, et avant la mise en service du composant traité, il faut s'assurer que tout le matériau protecteur a bien été éliminé. L'application des procédés de traitement de surface classiques présente donc souvent des difficultés de mise en œuvre pour ces raisons.

C'est le cas, par exemple, pour les revêtements internes des gaines de crayons de combustible. En effet, il est connu d'utiliser, dans le cœur des réacteurs nucléaires, des assemblages de combustible qui comportent des crayons contenant une substance absorbant fortement les neutrons tel que du gadolinium ou de l'erbium ou du diborure de zirconium ZrB₂. Ce dernier est, en particulier, utilisé sous forme d'un revêtement interne des tubes de gainage généralement réalisé par dépôt superficiel, via des procédés souvent complexes à mettre en œuvre et qui ne permettent pas de garantir une qualité constante du revêtement, en ce qui concerne son état de surface, son adhérence et l'obtention d'une épaisseur définie et constante du revêtement. Par ailleurs il est souvent très difficile d'éviter la présence de revêtement dans les parties d'extrémité du tube sur lesquelles doivent être soudés ultérieurement les bouchons de fermeture du crayon de combustible.

L'assemblage combustible comporte également des éléments plats, tels que les feuillards ou plaquettes de grille. Ils doivent présenter des propriétés mécaniques précises, obtenues par un choix approprié de leur composition et des traitements auxquels ils sont soumis lors de leur fabrication. Là encore, un traitement de surface peut avoir une influence positive ou négative sur ces propriétés mécaniques, et la mise au point de traitements de surface aisés et économiques à mettre en œuvre et procurant des propriétés améliorées au composant serait d'un grand intérêt.

La sensibilité à l'usure des composants en hafnium lors du frottement sur les éléments de guidage (tubes-guides ou boîtiers) nécessite un traitement de surface. Ce traitement de surface peut être réalisé par diffusion d'oxygène à 860°C durant quelques heures dans une atmosphère d'argon-oxygène. On ne sait pas, dans ce cas, protéger des zones qui doivent être ultérieurement reprises par usinage ou mises en forme. Là encore, il existe un besoin pour un procédé de traitement de surface qui, d'une part, serait réalisé à une basse température et n'altèrerait donc pas trop les propriétés mécaniques de l'alliage, et d'autre part permettrait de masquer efficacement les zones ne devant pas être affectées par la diffusion d'oxygène.

Lorsqu'on recherche une amélioration de la résistance à la corrosion et/ou d'autres propriétés mécaniques ou chimiques du composant, on peut penser à mettre en œuvre des revêtements protecteurs métalliques ou céramiques. Cependant cette technologie présente des limites liées à la non-adhérence du revêtement et aux fissures pouvant apparaître lors des cyclages thermiques ou des sollicitations mécaniques.

Il est également connu que le dépôt de CRUD est lié à la précipitation par réaction chimique de colloïdes présents dans le circuit primaire sur la surface des crayons, en particulier si cette surface est rugueuse. Le document EP-A-1 486 988 propose de réaliser une alternance de zones polies et non polies sur la surface des crayons pour limiter l'accrochage et la croissance des germes d'oxyde.

On peut aussi mettre en œuvre des traitements de diffusion par voie thermochimique d'éléments tels que le carbone, l'azote, le bore, l'oxygène.... Mais s'ils améliorent bien la tenue mécanique, certains éléments peuvent être incompatibles avec une application aux alliages de zirconium. La diffusion de carbone et d'azote nuit à la tenue en corrosion en eau à haute température, et le bore est un absorbant neutronique qui se transforme sous irradiation en hélium gazeux. De plus ces traitements doivent être exécutés à une température trop élevée pour maintenir les propriétés mécaniques du substrat. Ainsi, une diffusion d'oxygène sur une vingtaine de µm de profondeur ne pourrait être effectuée sur un alliage de zirconium préparé selon les procédés classiques qu'à une température de l'ordre de 800°C durant quelques heures, ce qui entraînerait inévitablement une modification radicale de la structure métallurgique de l'ensemble du matériau. Cela nécessiterait de repenser totalement les étapes antérieures du processus de fabrication pour obtenir les propriétés finales visées, et il n'est pas du tout sûr qu'il serait possible d'y parvenir.

Pour la réalisation d'une diffusion superficielle d'oxygène sur une quarantaine de µm sur les alliages de hafnium, la température ou la durée doivent être encore plus élevées (930°C - 3h, ou 860°C - 6h ou 8 00°C - 36h), ce qui est incompatible avec le maintien de propriétés mécaniques élevées liées à un état écroui (température de recristallisation de l'ordre de 700-750°C). Le traitement de diffusion d'oxygène sur du hafnium à 650°C durant 6 h ne conduit qu'à une couche d'oxyde d'épaisseur de l'ordre de 1,5µm et une couche de diffusion d'oxygène sous-jacente de faible épaisseur (3-5µm), ce qui est insuffisant pour résister à l'usure.

Le but de l'invention est de proposer un type de traitement superficiel final d'alliages de zirconium ou de hafnium, notamment pour l'industrie nucléaire, permettant d'améliorer les propriétés de frottement et/ou de résistance aux différents types de corrosion, sans pour autant altérer les propriétés mécaniques du composant qui auraient été soigneusement ajustées par le choix et l'exécution des étapes précédentes du processus de fabrication, voire de les améliorer.

A cet effet, l'invention a pour objet un procédé de traitement superficiel d'au moins une partie d'un composant en alliage de zirconium ou de hafnium, caractérisé en ce qu'il comporte au moins une opération de nanostructuration d'une couche superficielle de l'alliage, de manière à procurer à l'alliage sur une épaisseur d'au moins 5µm, une taille de grains inférieure ou égale à 100 nm, ladite nanostructuration étant effectuée à une température inférieure ou égale à celle du dernier traitement thermique subi précédemment par ledit composant lors de sa fabrication.

La profondeur de la couche nanostructurée est de préférence d'au moins 5 µm, mieux au moins 20 µm.

Au moins l'une desdites nanostructurations peut être effectuée par SMAT.

Au moins l'une desdites nanostructurations peut être effectuée par USSP.

Le procédé peut être exécuté sur la surface extérieure dudit composant.

Le procédé peut être exécuté sur une surface intérieure dudit composant.

On peut réaliser à sa suite ou en même temps que lui un traitement modifiant la composition de la couche nanostructurée, réalisé à une température inférieure ou égale à celle du dernier traitement thermique subi précédemment par ledit composant lors de sa fabrication.

Ledit traitement modifiant la composition de ladite couche nanostructurée peut être un traitement thermochimique de diffusion d'un ou plusieurs éléments.

Ledit élément diffusé peut être l'oxygène.

On peut réaliser la diffusion de l'oxygène dans un four sous atmosphère Ar-O₂ ou Ar-CO₂.

La diffusion d'oxygène dans la couche nanostructurée peut être réalisée naturellement au cours de l'utilisation du composant.

Le ou lesdits éléments diffusés peuvent être le carbone et/ou l'azote.

Le ou lesdits éléments diffusés peuvent être choisis parmi l'erbium, le gadolinium, l'europium, le samarium, le dysprosium, le hafnium, le bore ou leurs mélanges.

Ledit élément diffusé peut être le chrome.

La diffusion desdits éléments diffusés peut être une codiffusion ou une diffusion séquencée de plusieurs d'entre eux.

Ledit traitement modifiant la composition de ladite couche nanostructurée peut être un traitement de dépôt chimique en phase vapeur d'un ou plusieurs éléments.

Ledit alliage de zirconium ou de hafnium peut être un alliage utilisable dans la fabrication des composants de réacteurs nucléaires.

Ledit alliage peut être un alliage de zirconium comportant comme éléments d'addition au moins de l'étain, du fer, du chrome et de l'oxygène.

Ledit alliage peut comporter également du nickel.

Ledit alliage peut comporter comme élément d'addition au moins du niobium, optionnellement également d'autres éléments tels que de l'oxygène, du fer et/ou de l'étain.

L'invention a également pour objet une pièce en alliage de zirconium, caractérisée en ce qu'elle a été traitée superficiellement par le procédé précédent.

Il peut s'agir d'un élément pour assemblage de combustible nucléaire.

Ledit alliage peut être un alliage de hafnium comportant comme éléments d'addition au moins de l'oxygène et du fer et au plus 2,5%, de préférence au plus 1%, de zirconium résiduel.

L'invention a également pour objet une pièce en alliage de hafnium, caractérisée en ce qu'elle a été traitée superficiellement par le procédé précédent.

Il peut s'agir d'un composant absorbant neutronique pour grappe de commande ou croix de contrôle de réacteur nucléaire.

Comme on l'aura compris, l'invention repose d'abord sur l'exécution d'un traitement mécanique de nanostructuration de la surface de l'alliage de zirconium ou de hafnium par une forte déformation plastique superficielle.

La profondeur sur laquelle cette transformation structurale est réalisée dépend de son objectif. Une profondeur d'au moins 5µm pour des applications physicochimiques (corrosion, relâchement, pertes de charges, ...) et d'au moins 12µm pour des applications mécaniques (usure, frottement sous charge) permet d'améliorer le comportement en corrosion et/ou en thermohydraulique (pertes de charge, ébullition, transferts thermiques, non-nucléation de dépôts d'oxydes).

Une profondeur de quelques dizaines de µm (15 à 50 µm par exemple) est adaptée à la limitation de l'usure du matériau.

Une profondeur de quelques centaines de µm (50 à 250 µm par exemple) est adaptée à l'intégration de poisons neutroniques.

Cette nanostructuration consiste à affiner la microstructure du matériau, habituellement microscopique (de 1 à 10 µm) après les opérations d'élaboration, jusqu'à obtenir une taille des grains inférieure à 100 nm, de préférence de l'ordre de 30 nm ou moins, correspondant pratiquement à l'obtention d'une structure amorphe.

Cette nanostructuration seule peut être déjà suffisante pour améliorer les propriétés de frottement du composant traité, ainsi que sa résistance à la fatigue, à cause de l'écrouissage superficiel qu'elle implique. Cependant cette structure n'est pas toujours capable de subsister pour tous les composants dans les conditions de fonctionnement d'un réacteur nucléaire, à cause de la recristallisation due au maintien durant plusieurs milliers d'heures aux hautes températures atteintes et à l'irradiation.

Cette nanostructuration constitue un terrain favorable à l'exécution de traitements de surface à relativement basse température, car elle augmente de plusieurs puissances de 10 le flux de diffusion intergranulaire.

En particulier, il devient possible de réaliser à température modérée (c'est-à-dire notamment en dessous de la température des derniers traitements thermiques de la gamme d'élaboration des composants en zirconium, soit, pour certains d'entre eux, 480 à 560°C selon leur état métallurgi que détendu ou recristallisé) une couche de diffusion d'oxygène sur une épaisseur correspondant à la profondeur de la zone nanostructurée (par exemple de l'ordre de 20 µm et davantage), sans formation importante de zircone (sauf dans certains cas particuliers où la formation d'une couche superficielle de zircone est recherchée, mais à condition qu'elle puisse s'ancrer sur une couche de diffusion enrichie en oxygène, que la nanostructuration de la surface permet d'obtenir).

De même sur le hafnium, il devient possible de réaliser une diffusion d'oxygène à 600°C sur une profondeur d'une quarantaine de µm.

L'invention sera mieux comprise à la lecture de la description qui suit, donnée en référence aux figures annexées suivantes :
- la figure 1 qui montre une coupe métallographique de la surface d'un tube de Zircaloy 4 ayant subi une nanostructuration selon l'invention ;
- la figure 2 qui montre une coupe métalllographique d'un échantillon comparable à celui de la figure 1, après un séjour de 15 h sous air à 450°C ;
- la figure 3 qui montre la teneur en oxygène dans les couches superficielles d'échantillons de Zircaloy 4 ayant ou non subi un traitement de nanostructuration selon l'invention ;
- la figure 4 qui montre la teneur en oxygène de ces mêmes couches superficielles après un séjour de 15 h sous air à 450°C.

Divers procédés de traitement de la surface d'un matériau sans apport de matière conduisent à une telle nanostructuration, et sont utilisables dans le cadre de l'invention. On va en décrire quelques-uns, sans que leur liste doive être considérée comme limitative.

C'est le cas d'un grenaillage au moyen de billes, plus dures que le substrat, réalisées en acier ou en zircone (ce matériau étant le plus adapté pour limiter les risques de pollution éventuels du zirconium), voire moins dures (telles que la glace et la carboglace). Un grenaillage peut être utilisé, de manière connue, pour réaliser des contraintes de compression en surface des pièces afin d'améliorer leur comportement en usure, fatigue, voire corrosion.

Cependant, le mode précis de grenaillage est important à déterminer pour obtenir des résultats optimaux en termes de qualité du produit final et de coût de l'opération, afin de résoudre les problèmes précis que l'invention se propose de traiter, en particulier lorsqu'une diffusion d'un ou plusieurs éléments dans la couche nanostructurée est réalisée par la suite.

Diverses autres techniques de traitement mécaniques sont envisageables pour réaliser la nanostructuration des couches superficielles sur des matériaux métalliques par mise en œuvre de contraintes superficielles élevées, comme le grenaillage par décharge, le traitement par grenaillage par laser, la micro-cavitation (water jet), le roulement de surface et l'usinage ultra-rapide.

Le procédé SMAT (Surface Mechanical Attrition Treatment), décrit par exemple dans « Materials Science and Engineering A 375-377 (2004) 38-45) » ou dans le document WO-A-02/10462, permet la nanostructuration de la surface d'un matériau métallique par l'introduction de défauts et/ou d'interfaces dans les grains de matière qui vont conduire à la multiplication des sous-grains. Le bombardement de la surface par des billes sphériques lisses est obtenu par la mise en vibration de ces billes dans une chambre, dont une des parois vibre et dont une autre paroi est constituée par la surface à traiter. Les billes peuvent avoir une taille de 1 à 10 mm et être constituées de diverses matières. La fréquence de vibration de la chambre est de 50 à 20000 Hz, de sorte que les billes excitées rebondissent sur les parois, s'entrechoquent et bombardent la surface à traiter dans un large spectre de directions et de vitesses en un temps court. La vitesse des billes est de 1 à 20 m/s selon la fréquence de vibration, la taille des billes et la distance entre la paroi à traiter et la paroi vibrante. Chaque impact induit une déformation plastique. En conséquence, la multiplication des impacts multidirectionnels conduit à une déformation plastique sévère et à la réduction progressive de la taille de grain, jusqu'à l'obtention d'une taille nanométrique sur toute la surface grenaillée.

En règle générale, la taille des grains croît graduellement depuis la surface jusqu'à une profondeur d'une cinquantaine de µm, de quelques nm en surface jusqu'à une centaine de nm en profondeur. Au-delà (jusqu'à une profondeur de 100µm environ), on rencontre une couche à structure affinée consistant en des cristallites de taille submicronique. Dans des couches plus profondes, les grains sont déformés avec la présence de toutes sortes de configurations de dislocation, comme des empilements denses, des entrelacs et des cellules de dislocations.

La comparaison du SMAT et du grenaillage classique, dit shot-peening (SP), dans lequel on n'utilise pas d'ultra-sons, fait apparaître plusieurs différences. La taille des billes peut être plus élevée dans le SMAT (1-10mm) que dans le SP (0.2-1 mm). La surface des billes doit être aussi lisse que possible sous peine d'exacerber des phénomènes d'abrasion de la surface. La vitesse des billes dans le SMAT est bien inférieure (1-20 m/s) à celle du grenaillage conventionnel (typiquement environ 100 m/s). Le SP est un procédé assez directionnel (le flux de billes est normal à la surface). Mais, dans le SMAT, les impacts sont multidirectionnels ce qui est nécessaire pour induire l'affinage de la structure des grains.

Dans une des mises en œuvre du procédé SMAT décrite par exemple dans le document FR2812285, les billes sont dirigées sur la surface de la pièce au moyen d'une buse de projection mobile en translation et/ou rotation (à moins que ce ne soit la pièce elle-même qui se déplace devant la buse qui reste fixe). Les billes sont parfaitement sphériques, et on joue sur leurs ricochets contre les parois de l'enceinte, conique ou hémisphérique, pour leur faire percuter la surface de la pièce un grand nombre de fois, selon des directions d'incidences différentes et variées. Les billes sont récupérées par gravité et renvoyées dans la buse. En prévoyant une fréquence des ultrasons élevée (50 kHz par exemple) et une durée du traitement suffisante (de quelques minutes à 1 h par exemple), la nanostructuration de la surface traitée peut concerner une couche pouvant atteindre plusieurs dizaines de µm. Dans un autre mode de mise en œuvre du procédé décrit dans le document WO200210463, la surface à traiter constitue la paroi d'une boite renfermant les billes, la boite dans son ensemble étant agitée pour que le mouvement des billes grenaille la surface à traiter.

Le procédé de grenaillage par ultra-sons USSP (Ultrasonic Shot Peening), décrit dans le document FR-A-2 689 431, est une application dans des conditions un peu différentes du principe de base du SMAT. Il consiste à introduire la pièce à traiter dans une enceinte fermée et à y mettre en mouvement des billes dures, métalliques ou céramiques, de 0,1 à 3 mm de diamètre environ, au moyen d'un générateur d'ultrasons (20 kHz environ). Celui-ci se déplace de façon à réaliser un traitement régulier de l'ensemble de la surface de la pièce. Ce procédé convient lorsqu'on ne désire obtenir une nanostructuration que sur une profondeur limitée à quelques dizaines de µm.

De manière générale, les procédés de grenaillage à ultrasons présentent de nombreux avantages sur les procédés plus classiques, dans le cadre de l'invention.

On peut choisir la géométrie de la chambre et les paramètres de grenaillage en fonction de la forme de la pièce à traiter, afin d'obtenir un traitement homogène sur l'ensemble des surfaces.

Un démontage de la pièce n'est pas nécessaire pour réaliser le traitement.

Les paramètres du grenaillage peuvent être contrôlés avec précision, garantissant une bonne reproductibilité des résultats.

Les traitements peuvent être relativement brefs.

Au contact des parois vibrantes, les billes sont projetées, s'entrechoquent et se déplacent aléatoirement dans l'enceinte durant le traitement, à la manière des molécules d'un gaz. On obtient ainsi un traitement homogène dans l'ensemble du volume de l'enceinte.

Le taux de recouvrement peut rapidement atteindre les valeurs souhaitées de, par exemple, 200 à 400% (autrement dit, dans cet exemple chaque point de la surface à traiter subit 2 à 4 impacts de bille pendant la durée du traitement).

Le coût est faible par rapport à un grenaillage qui emploierait un jet d'air comprimé, car on peut aisément récupérer les billes de grenaillage dont le coût est élevé.

Les billes étant récupérées et réutilisées pendant tout le traitement, on peut en employer un nombre relativement faible mais d'une qualité élevée et constante en termes de dureté élevée et de forme sphérique, en maintenant ainsi le coût du traitement dans des limites très acceptables. Cette qualité élevée des billes permet de moins dégrader l'état de surface de la pièce qu'avec des billes de qualité courante. On améliore ainsi la résistance à la fatigue de la pièce, on diminue les risques de casse des billes en cours de traitement et la dégradation de la surface de la pièce qu'elle entraînerait, et on garantit une bonne reproductibilité du traitement.

Enfin, dans le cas où on veut traiter la surface interne d'un tube tel qu'une gaine de combustible ou un tube-guide, on peut se servir du tube lui-même comme enceinte de traitement, si on utilise des billes de diamètre suffisamment faible.

Les zones qui ne doivent pas être traitées peuvent être masquées par des caches.

On peut envisager de réaliser plusieurs opérations de nanostructuration successives, éventuellement par des procédés différents, par exemple pour obtenir un gradient de propriétés selon l'épaisseur du produit dont on pourrait tirer profit pour les traitements ultérieurs. Ainsi, une première nanostructuration moyenne mais profonde peut être suivie par une deuxième nanostructuration plus fine et plus superficielle. La première nanostructuration aurait, par exemple, pour but d'affecter les propriétés mécaniques du matériau en profondeur, alors que la deuxième nanostructuration aurait, par exemple, pour but de diminuer l'adhésion du CRUD.

Après cette nanostructuration de la couche supérieure de la pièce, on peut ensuite, selon une variante de l'invention, procéder à un traitement de diffusion d'oxygène à l'intérieur de la couche nanostructurée, en évitant cependant autant que possible la formation de zircone (dans le cas où la pièce traitée est en alliage de Zr). La diffusion d'autres éléments tels que l'azote, le carbone, l'erbium, le gadolinium, l'europium, le samarium, le dysprosium, le hafnium, le bore (liste non exhaustive), est également envisageable pour obtenir divers effets. La diffusion d'oxygène, sans formation significative de zircone, est particulièrement indiquée pour augmenter la résistance de la surface traitée à la corrosion.

Eventuellement, le traitement de diffusion peut être réalisé simultanément à la nanostructuration, si la température de traitement est compatible avec une exécution satisfaisante des deux opérations
Pour réaliser cette diffusion, il faut choisir la température et la durée du traitement, ainsi que le milieu fournissant l'élément à diffuser, par exemple l'oxygène.

La concentration superficielle de l'élément diffusant, la température et la durée pilotent la diffusion de l'élément chimique. Elles doivent être choisies pour permettre cette diffusion avec les résultats visés, mais aussi pour ne pas dégrader les propriétés mécaniques obtenues lors des traitements précédents. La température ne devra donc, normalement, pas dépasser celle du dernier traitement thermique précédant le traitement selon l'invention qui a permis d'obtenir lesdites propriétés mécaniques finales. Egalement, la température et le temps de traitement ne doivent pas dégrader la nanostructure de la surface obtenue lors de la première étape, notamment par une croissance des grains et une relaxation des contraintes. Une température de 400 à 560°C est bien adaptée au cas du traitement de la surface externe d'une gaine en un alliage de zirconium, par exemple de type Zircaloy 4 ou M5®.

Quant au milieu fournissant l'oxygène, si c'est cet élément que l'on souhaite diffuser, il peut être préférable d'éviter l'air, car il introduirait un peu d'azote dans la couche de diffusion, ce qui n'est pas toujours souhaitable, pour des raisons de tenue en corrosion, si l'alliage a déjà initialement une teneur en azote proche du maximum acceptable. L'eau peut conduire à une hydruration superficielle dommageable pour les propriétés mécaniques. Les milieux Ar-O₂ et Ar-CO₂ sont donc parmi les plus indiqués à cet effet.

De manière générale, la pression partielle d'oxygène ne doit pas être importante au point de conduire à privilégier la formation d'oxyde par rapport à la diffusion d'oxygène atomique, au moins hors de l'extrême surface de la couche nanostructurée. Un milieu Ar-O₂ à 3-20% d'oxygène, ou l'air (avec les réserves citées plus haut), ou un milieu à plus haute teneur en oxygène mais sous pression réduite de quelques mbar (0,5 à 5) sont recommandables à cet effet.

L'opération peut être réalisée en four ouvert, à flux d'oxygène constant. La surface de la pièce se charge alors en oxygène jusqu'à atteindre la concentration superficielle d'équilibre, puis un équilibre s'instaure entre le flux entrant à la surface et le flux diffusant vers l'intérieur de la pièce. L'épaisseur de la couche d'oxyde et celle de la couche de diffusion augmentent selon les lois de diffusion.

L'opération peut aussi être réalisée en four fermé, donc renfermant au départ une quantité d'oxygène donnée qui n'est pas renouvelée par la suite. La quantité d'oxygène disponible limite l'épaississement de la couche d'oxyde, alors que la couche de diffusion continue à croître tant que la teneur en oxygène de l'interface métal-oxyde reste élevée, c'est-à-dire tant qu'il reste une couche d'oxyde.

Dans les deux cas on a pour objectif d'induire sur la profondeur désirée (de quelques µm à quelques dizaines de µm) une sursaturation en oxygène de la surface du métal, tout en minimisant la croissance de la couche d'oxyde superficielle.

Egalement, au lieu d'un traitement par diffusion d'oxygène ou d'un autre élément, on peut envisager de réaliser un traitement superficiel de la surface nanostructurée par un dépôt chimique en phase vapeur (CVD ou OMCVD). Cette opération peut concerner, par exemple, le dépôt local d'un poison consommable (erbium ou gadolinium par exemple) sur la paroi interne des gaines des crayons de combustible Mais une diffusion de ces éléments dans la surface nanostructurée, effectuée de manière comparable à ce qui a été décrit pour la diffusion d'oxygène, est également possible. Dans un tel procédé, la nanostructuration préliminaire est susceptible :
- de favoriser la réactivité initiale de la surface, ce qui permet de diminuer la température de dépôt et de limiter la réaction en phase homogène
- de favoriser une diffusion superficielle, surtout à basse température, ce qui augmentera l'adhérence du dépôt ;
- de limiter la réorientation des grains lors de la croissance de la couche en conservant l'effet du « désordre initial » (moins de croissance basaltique ou colonnaire).

Là encore, pour ne pas dégrader les propriétés et structures obtenues par les traitements précédents, il ne faut pas que ce traitement superficiel soit réalisé à une température supérieure à celle du dernier traitement thermique ayant précédé la nanostructuration.

Une possibilité consiste également à réaliser une première nanostructuration sur une profondeur relativement importante, puis un traitement tirant parti de cette nanostructuration, tel qu'une diffusion d'oxygène intéressant au moins l'essentiel de cette couche nanostructurée. Puis on peut réaliser au moins une autre nanostructuration plus fine sur une profondeur plus faible que la première, cette autre nanostructuration pouvant elle-même être accompagnée ou suivie par un traitement en tirant parti, pouvant être par exemple une diffusion supplémentaire d'oxygène ou d'un autre élément, un dépôt chimique en phase vapeur...

Le procédé selon l'invention peut être exécuté sur la totalité de la pièce concernée, ou seulement sur une partie de celle-ci où il serait particulièrement utile, alors qu'il serait superflu, voire non recommandé, sur le restant de la pièce.

On peut également envisager que la diffusion d'oxygène dans la couche nanostructurée s'effectue de façon naturelle pendant l'utilisation du composant, si celui-ci est exposé à un milieu susceptible de libérer cet oxygène (par exemple par oxydation lors de l'exposition à de l'eau à haute température).

Des applications de l'invention que l'on peut citer, de manière non limitative, sont les suivantes :
- protection de l'extérieur d'une gaine de crayon de combustible contre l'oxydation et l'hydruration, augmentation de sa résistance à l'usure, diminution de l'adhérence des boues formées de produits de corrosion (« CRUD »), réduction des pertes de charge, augmentation des propriétés mécaniques ; à cet effet on peut réaliser une nanostructuration par SMAT, suivie, ou accompagnée, par une diffusion d'oxygène ; une diffusion de carbone ou de chrome est également envisageable pour protéger la gaine contre la corrosion ;
- protection de l'intérieur de cette même gaine contre l'interaction pastilles-gaines (IPG) et contre l'hydruration secondaire, et amélioration de ses propriétés mécaniques ; à cet effet on peut réaliser une nanostructuration par SMAT, suivie, ou accompagnée, par une diffusion d'oxygène ;
- dépôt local d'un poison consommable (tel que l'erbium ou le gadolinium) sur la paroi interne des gaines, par nanostructuration par SMAT puis diffusion du poison dans la couche nanostructurée, ou dépôt du poison par CVD ;
- protection de l'intérieur des tubes-guides contre leur usure par les extrémités des grappes de commande, et augmentation des propriétés mécaniques des tubes-guides, par nanostructuration de leur surface suivie d'une diffusion ultérieure d'oxygène ;
- traitement mécanique de nanostructuration, suivi éventuellement par un traitement de diffusion exécuté sur la surface des ressorts de grille en alliage de zirconium, pour favoriser leur glissement contre les crayons de combustible et leur comportement électrochimique afin d'en limiter les risques d'usure et de corrosion localisée ; une nanostructuration par USSP peut être suffisante à cet effet ; l'élément diffusé peut être l'oxygène ;
- traitement de pièces en hafnium pour l'absorption neutronique, par nanostructuration SMAT de leur surface, puis diffusion d'oxygène, dans le but d'améliorer leur tenue à l'usure ;
- traitement de pièces en alliage de zirconium et/ou en hafnium (non soumises à des sollicitations en corrosion par de l'eau ou de la vapeur à haute température) par nanostructuration SMAT de leur surface, puis diffusion d'azote (par nitruration gazeuse ou ionique à 300-600°C), dans le but d'améliorer leur tenue à l'usure.

L'invention peut également être utilisée dans d'autres domaines que l'industrie nucléaire, pour des applications où la nanostructuration de la surface d'un alliage de zirconium ou de hafnium, éventuellement suivie d'un traitement physico-chimique (diffusion, dépôt par CVD...) apparaîtrait utile.

Des exemples de traitements réalisés conformément à l'invention vont à présent être décrits de façon détaillée.

### a) traitement anti-usure de la surface externe des crayons de combustible

Des tubes de gainage de combustible nucléaire en alliage de zirconium, de longueur avoisinant 4 m et d'épaisseur avoisinant 0,5-0,6 mm, sont traités extérieurement, après la dernière passe de laminage, lors d'un traitement de surface mécanique par grenaillage au moyen de billes de zircone de diamètre 0,5 à 2,5 mm. L'utilisation de billes de zircone permet d'éviter toute pollution de l'alliage qui pourrait se traduire ultérieurement par un affaiblissement de la résistance à la corrosion par l'eau du circuit primaire.

L'agitation des billes est assurée par la sole d'une chambre vibrant à haute fréquence (5000 à 20000 Hz), chaque tube traversant cette chambre. L'amplitude de vibration est choisie dans un domaine de 20 à 100 µm (selon le diamètre de billes choisi). La durée du traitement mécanique est de 5-15 minutes environ. Pour améliorer l'homogénéité du traitement, les tubes sont mis en rotation (1-2 tours/minute).

Le traitement peut se faire en une seule fois (si la chambre est assez longue), ou en plusieurs séquences avec avancée des tubes pas à pas avec recouvrement, ou au défilé avec avancée continue. Les extrémités des tubes ne sont pas traitées. A cet effet, on ne fait tout simplement pas passer ces extrémités dans la chambre lorsque les billes sont en mouvement.

Après cette activation mécanique de la surface, les tubes subissent un traitement thermochimique dans une atmosphère Ar-O₂ (3-15%O₂ sous 0.5 à 5 mbar) à une température inférieure à la température du dernier traitement thermique, par exemple pendant 15h à 400°C pour des tubes en Zircaloy 4. Il s'en suit une pénétration d'oxygène sous forme de solution solide sur environ 20 µm de profondeur sans formation d'une couche de zircone de plus de 1 µm sur toute la surface activée mécaniquement, les extrémités non activées ne présentant pas de diffusion d'oxygène et une infime oxydation superficielle (moins de 500 nm).

Ce traitement thermochimique peut être réalisé après le dernier traitement thermique ayant été effectué sous vide ou gaz non oxydant. Il peut aussi, par souci d'économies d'énergie et de manutentions, être réalisé en même temps que le traitement thermique en introduisant le mélange oxydant dans le four à la température souhaitée.

Les gainages ainsi traités peuvent alors subir toutes les opérations de finition encore à réaliser, puis être soudés aux bouchons de crayons de combustible sans que la soudure ne soit affectée par la présence d'oxygène. Le durcissement de la surface externe permet d'éviter l'apparition de défauts de fabrication à la suite de chocs, d'éviter l'altération de la surface des crayons lors de l'insertion de ceux-ci dans l'assemblage de combustible, ce qui peut nuire à leur tenue à la corrosion lors du maintien prolongé en réacteur, de renforcer la tenue du crayon à l'usure aux points de contact avec les grilles de l'assemblage et par les corps migrants parfois présents dans le circuit primaire.

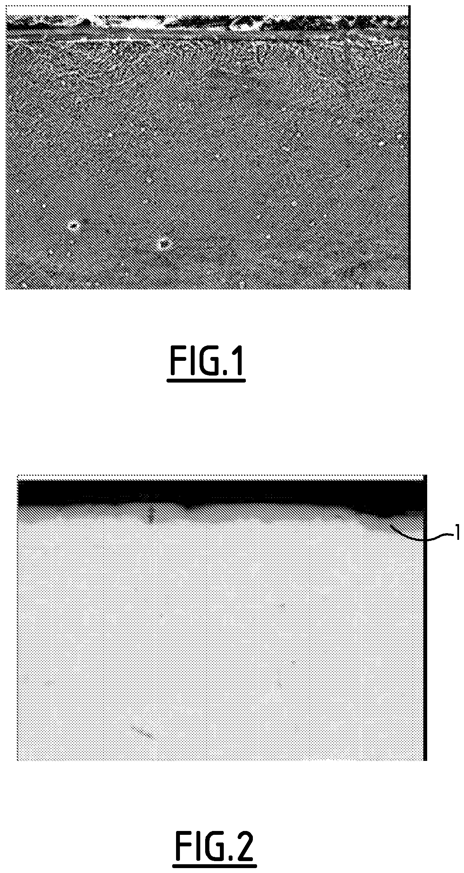

Les figures 1 à 4 sont représentatives des effets d'un tel traitement. Elles concernent des échantillons de tubes en Zircaloy 4.

La figure 1 montre l'état de nanostructuration de la couche superficielle de ces tubes à l'état détendu, après un grenaillage USSP réalisé pendant 15 min avec des billes en zircone de diamètre 0,8 mm. L'amplitude des vibrations était de 50 µm et leur fréquence 20 kHz. Ces conditions de traitement sont de relativement faible énergie, et ont conduit à une nanostructuration sur une épaisseur de quelques µm seulement. Il aurait été possible de la réaliser sur une épaisseur plus importante.

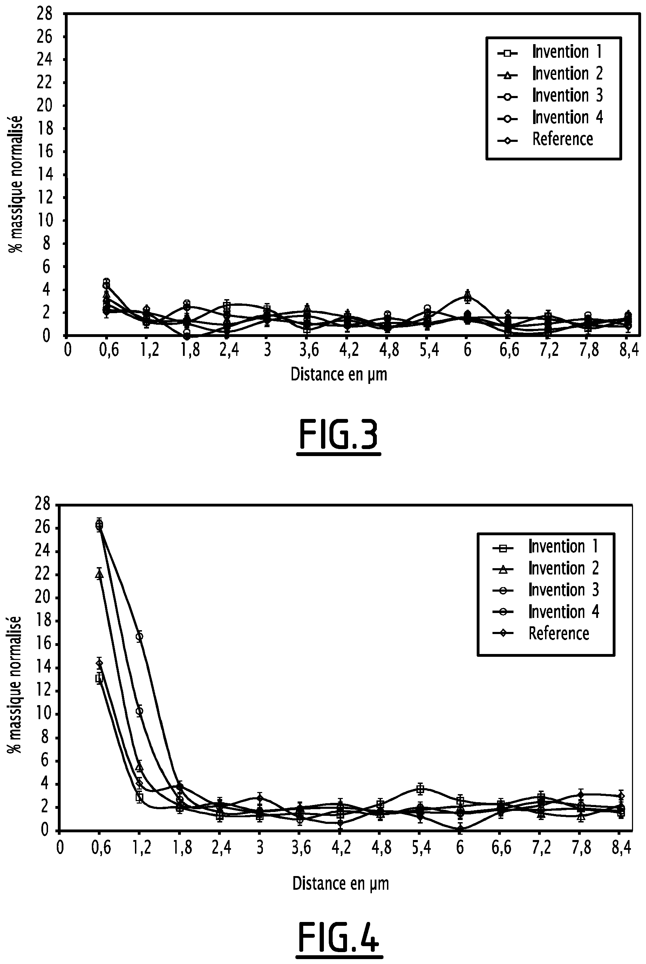

La figure 2 montre (en mode composition de phase) les couches superficielles de ce même tube après qu'il a subi un séjour de 15 h sous air à 450°C. Ce séjour a entraîné la formation d'une couche de zircone 1 de l'ordre de 1 µm d'épaisseur en extrême surface, mais n'a pas provoqué d'oxydation plus profonde du métal sous forme de zircone. En revanche, il a provoqué la diffusion d'oxygène atomique dans la couche nanostructurée, comme le montre la figure 4.

La figure 3 montre la teneur en oxygène en extrême surface d'échantillons comparables à ceux de la figure 1 (donc avant traitement dans l'air), dans des cas où il n'y a pas eu de nanostructuration des couches superficielles (référence) et des nanostructurations d'énergies croissantes (invention 1 à invention 4). Elle est mesurée par spectrométrie à dispersion d'électrons (EDS). On voit que sur tous les échantillons, cette teneur est de l'ordre de moins de 3% sur une épaisseur de 8 µm environ. Les constitutions de grenaillage des échantillons sont exposées dans le tableau 1.

**Tableau 1 : conditions de grenaillage des échantillons**

| | Diamètre des billes | Amplitude de vibration | Durée de traitement |
|---|---|---|---|
| Référence | Non grenaillé | | |
| Invention 1 | 0,85mm | 25µm | 15min |
| Invention 2 | 1,6-2,5mm | 25µm | 10min |
| Invention 3 | 0,85mm | 40µm | 10min |
| Invention 4 | 0,85mm | 52µm | 10min |

La figure 4 montre cette même teneur en oxygène sur ces échantillons après qu'ils ont subi un traitement sous air à 450°C pendant 15 h. En extrême surface, on observe dans tous les cas, à des degrés divers, la formation d'une couche superficielle de zircone qui conduit à une augmentation très sensible de la teneur en oxygène sur une épaisseur de l'ordre de 1,5 µm. Cependant, les échantillons nanostructurés superficiellement se comportent différemment de l'échantillon de référence non nanostructuré, d'autant plus que la nanostructuration a été effectuée avec une énergie plus élevée. Dans leur cas, on observe une teneur en oxygène en extrême surface sensiblement plus élevé, ainsi qu'une diminution nettement plus progressive de la teneur en oxygène selon la profondeur de la couche superficielle. Cette teneur en oxygène retrouve son niveau normal pour une profondeur d'environ 2 µm. En comparant les figures 2 et 4 qui correspondent à l'exemple « invention 4 » ci-dessus, on voit qu'au-delà de 1µm dans l'exemple considéré, l'augmentation de la teneur en oxygène ne correspond pas à la formation de zircone, mais bien à une diffusion d'oxygène atomique, comme recherché dans le cadre de l'invention.

### b) traitement anti usure de la surface interne des tubes-guides

Des tubes-guides de combustible nucléaire en alliage de zirconium, de longueur avoisinant 4 m et d'épaisseur avoisinant 0.4 mm, sont traités intérieurement sur leur partie supérieure, après la dernière passe de laminage, lors d'un traitement de surface mécanique par grenaillage au moyen de billes de zircone de diamètre 0.5 à 1.5mm. Les billes introduites dans chaque tube, dans une portion limitée par des bouchons amovibles, sont agitées par agitation ultrasonique du tube-guide lui-même ou par introduction d'un élément vibrant ultrasonique à l'intérieur de chaque tube. Les conditions de traitement sont semblables à celles de l'exemple précédent. Les zones qui doivent être soudées aux grilles pour former le squelette de l'assemblage peuvent l'être sans craindre un effet de la présence d'oxygène puisque ces zones, n'ayant pas été activées mécaniquement du fait de masquages, ne seront pas non plus oxydées.

Il s'en suit une diffusion analogue à celle de l'exemple précédent à l'intérieur du tube-guide, ce qui permet d'augmenter sa résistance à l'usure par les crayons de grappes de commande insérés en permanence dans les tubes-guides et soumis à des flux transverses provoquant leur mise en vibration. Le risque de percement des tubes-guide qui perturberait les écoulements hydrauliques, ou d'amincissement de la paroi qui nuirait à la tenue mécanique lors des manutentions d'assemblages, est éliminé.

### c) incorporation de poisons consommables dans un alliage de Zr

L'intérieur des gainages de combustible est activé mécaniquement comme dans l'exemple précédent. Des billes de roulement en acier ou en alliage de nickel peuvent être utilisées puisque les phénomènes de corrosion ne sont guère à craindre à l'intérieur des crayons Elles peuvent avoir une taille un peu supérieure à celles des exemples précédents, soit 1 à 4 mm. De ce fait l'efficacité énergétique du traitement d'activation est plus importante et la profondeur affectée pourra atteindre 100 à 300µm.

Le traitement thermochimique est réalisé à une température inférieure à la température du dernier traitement thermique des alliages (celle-ci est d'environ 480°C pour l'obtention d'un état détendu, d'environ 560°C pour l'obtention d'un état recristallisé, ces températures pouvant, bien entendu, varier sensiblement selon la composition précise de l'alliage et le procédé d'obtention du composant). Il est conduit en introduisant un gaz réactif à l'intérieur des tubes (par exemple gaz porteur Ar-H₂ et composé organométallique d'erbium, tel que des β-dicétones chélates, cyclopentadiénides ou halogénures complexés par des halogénures d'aluminium par exemple).

Lors du traitement thermique, l'organométallique est décomposé ou réduit et l'erbium libéré diffuse sur toute la profondeur activée. On obtient ainsi un enrichissement en erbium sur une profondeur pouvant aller jusqu'à 300µm et une teneur de l'ordre de 20%.

Cet enrichissement en poison consommable (qui peut être non seulement l'erbium mais aussi un autre élément de la classe des terres rares tel que le gadolinium, le dysprosium, l'europium, le samarium, ou le hafnium, ou le bore, ainsi que des mélanges de ces éléments), équivalant à une teneur jusqu'à 3% dans toute l'épaisseur de la gaine, est suffisant pour permettre l'optimisation souhaitée du flux neutronique au cours de la vie du combustible sans induire d'augmentation de pression dans le crayon (absorbant du type n-γ et non du type n-a), sans atteinte à la tenue mécanique de la gaine ni à sa tenue en corrosion.

Dans une variante de cet exemple, on réalise, après activation de la surface, non une diffusion d'élément absorbant mais un dépôt d'oxyde de cet élément. Ainsi au gaz réducteur Ar-H₂ et réactif contenant le précurseur, par exemple sous forme de β-dicétones chélates, cyclopentadiénides ou halogénures complexés par des halogénures d'aluminium, on rajoute un élément oxydant tel que le gaz carbonique CO₂. On obtient ainsi un dépôt d'oxyde d'erbium croissant à 2-4 µm/h avec une excellente adhérence du fait de la diffusion dans la zone d'interface. La quantité équivalente à 3% de la gaine épaisse de 600 µm environ étant de 18 µm en erbium métallique ou 20,6µm en Er₂O₃, ce dépôt est effectivement obtenu en une dizaine d'heures.

Les traitements d'activation et de diffusion peuvent aussi être conduits sur des ébauches de tubes avant la dernière passe de laminage, ce qui permet de bénéficier d'une gamme de température de diffusion plus étendue (jusqu'à 800°C) et donc d'une quantité d'absorbant supérieure dans un temps court.

### d) traitement anti-CRUD de la surface externe des gaines de combustible

Comme dans le premier exemple, la surface externe des gainages de combustible est activée, mais sur une faible profondeur (environ 5 µm) en réduisant le temps de traitement et l'énergie des billes (diamètre inférieur à 1 mm et amplitude de vibration inférieure à 50 µm). Le traitement thermochimique est effectué à la température du dernier traitement thermique. On obtient ainsi une couche de zircone très cohérente de 1-2 µm d'épaisseur, solidement ancrée sur une couche où l'oxygène a diffusé sur environ 5 µm. Cette couche de zircone lisse, inerte chimiquement permet, en réacteur, d'éviter la germination de nodules d'oxydes à partir des ions en solution dans le circuit primaire, et donc l'entartrage des gaines par des CRUD, nuisible au transfert thermique du crayon et favorisant la corrosion de la gaine au droit des fissures de ces CRUD. Cette couche de zircone lisse et chimiquement inerte limite aussi les pertes de charge lors de la circulation du fluide primaire sur les crayons.

### e) amélioration de la tenue des plaquettes de grilles à la dégradation mécanique

Lors de la fabrication des grilles, le feuillard en alliage de zirconium est activé, sur chaque face, par grenaillage au moyen de billes de zircone sur une profondeur de 20 µm environ. La présence de contraintes superficielles de compression limite l'apparition d'amorces de fissures lors de la découpe et la mise en forme des plaquettes de grilles par emboutissage du feuillard. Après montage de la grille et soudage, l'ensemble de la grille est traité à environ 450°C durant quelques heures dans une atmosphère d'Ar-O₂ (3-15%O₂ sous 0,5 à 5 mbar).

Le traitement thermochimique conduit, comme dans l'exemple précédent, à la formation d'une fine couche de zircone lisse et cohérente, adhérant fermement au substrat du fait de la présence de la couche de diffusion enrichie en oxygène. Cette couche de zircone est favorable à la réduction des pertes de charges, ainsi qu'à un renforcement mécanique des éléments de support des crayons de combustible. Le risque de déformation de ces éléments de support par fluage est donc réduit, ce qui conduit à un meilleur maintien des crayons au cours des cycles en réacteur.

### f) amélioration de la tenue à l'usure de barreaux et plaques d'absorbant en hafnium

La surface externe de pièces en hafnium, utilisées comme composants de grappe de commande ou de croix de contrôle des réacteurs nucléaires, est activée par grenaillage par des billes de zircone comme dans le premier exemple sur une profondeur de 50 µm environ. Un traitement thermochimique sous Ar-O₂ à 650°C (3-15%O₂ sous 0,5 à 5 mbar) permet d'obtenir une diffusion d'oxygène sur 50 µm environ, et donc d'assurer la tenue à l'usure de la partie courante des grappes de commande contre les cartes de guidage ou dans le guidage continu et de l'extrémité inférieure contre les tubes-guides de l'assemblage de combustible ou des croix de contrôle contre le boîtier des assemblages de combustible.

Ce traitement est mis en œuvre sur une partie ou sur la totalité des composants, hormis la zone de liaison supérieure, avant le montage en crayons de grappes de commande ou en croix de contrôle puis sur les liaisons de ces crayons ou de ces plaques, une fois celles-ci terminées.

### g) amélioration de la tenue à l'usure de pièce en alliage de zirconium et/ou d'hafnium non sollicitées en corrosion dans l'eau ou la vapeur à haute température.

Il s'agit là de pièces de chaudronnerie pour usage chimique ou nucléaire sollicitées en usure (pièces de pompe, vannes, raccords, cuves, ...).

La surface externe est activée par grenaillage par des billes de zircone, d'acier ou même d'alliage 718 comme dans les exemples précédents sur une profondeur de 20 à 150 µm environ selon les sollicitations en usure (enfoncement, abrasion, érosion, cavitation ou fatigue).

Une diffusion ultérieure d'azote, de carbone ou d'azote et carbone est réalisée à basse température (400-550°C pour les alliages de zirconium, 600-650°C pour le hafnium) par des procédés thermochimiques en phase gazeuse ou plasma. A cet effet le gaz précurseur peut être à base d'ammoniac, d'un hydrocarbure tel que le propane ou le propène dans le cas du procédé gazeux ou d'azote et/ou de méthane dans le procédé ionique. La diffusion d'azote et de carbone atteint la profondeur nanostructurée en quelques heures. Le durcissement associé protège de l'usure. Les zones épargnées lors du grenaillage ne présentent pas de diffusion et peuvent être mises en forme et soudées ultérieurement.

## Revendications

1. Procédé de traitement superficiel d'au moins une partie d'un composant en alliage de zirconium ou de hafnium pour réacteur nucléaire à eau légère, **caractérisé en ce qu'**il comporte au moins une opération de nanostructuration d'une couche superficielle de l'alliage, de manière à procurer à l'alliage sur une épaisseur d'au moins 5µm une taille de grains inférieure ou égale à 100 nm, ladite nanostructuration étant effectuée à une température inférieure ou égale à celle du dernier traitement thermique subi précédemment par ledit composant lors de sa fabrication, et au moyen d'un procédé de grenaillage à ultrasons.

2. Procédé selon la revendication 1, **caractérisé en ce que** au moins l'une desdites nanostructurations est effectuée par SMAT.

3. Procédé selon la revendication 1 ou 2, **caractérisé en ce que** au moins l'une desdites nanostructurations est effectuée par USSP.

4. Procédé selon l'une des revendications 1 à 3, **caractérisé en ce qu'**il est exécuté sur la surface extérieure dudit composant.

5. Procédé selon l'une des revendications 1 à 4, **caractérisé en ce qu'**il est exécuté sur une surface intérieure dudit composant.

6. Procédé selon l'une des revendications 1 à 5, **caractérisé en ce qu'**on réalise à la suite d'au moins une des nanostructurations ou en même temps qu'elle un traitement modifiant la composition de la couche nanostructurée, réalisé à une température inférieure ou égale à celle du dernier traitement thermique subi précédemment par ledit composant lors de sa fabrication.

7. Procédé selon la revendication 6, **caractérisé en ce que** ledit traitement modifiant la composition de ladite couche nanostructurée est un traitement thermochimique de diffusion d'un ou plusieurs éléments.

8. Procédé selon la revendication 7, **caractérisé en ce que** ledit élément diffusé est l'oxygène.

9. Procédé selon la revendication 8, **caractérisé en ce qu'**on réalise la diffusion de l'oxygène dans un four sous atmosphère Ar-O₂ ou Ar-CO₂.

10. Procédé selon la revendication 8, **caractérisé en ce que** la diffusion d'oxygène dans la couche nanostructurée est réalisée naturellement au cours de l'utilisation du composant.

11. Procédé selon la revendication 7, **caractérisé en ce que** le ou lesdits éléments diffusés sont le carbone et/ou l'azote.

12. Procédé selon la revendication 7, **caractérisé en ce que** le ou lesdits éléments diffusés sont choisis parmi l'erbium, le gadolinium, l'europium, le samarium, le dysprosium, le hafnium, le bore ou leurs mélanges.

13. Procédé selon la revendication 7, **caractérisé en ce que** ledit élément diffusé est le chrome.

14. Procédé selon l'une des revendications 7 à 13, **caractérisé en ce qu'**on réalise une codiffusion ou une diffusion successive de plusieurs éléments.

15. Procédé selon la revendication 6, **caractérisé en ce que** ledit traitement modifiant la composition de ladite couche nanostructurée est un traitement de dépôt chimique en phase vapeur d'un ou plusieurs éléments.

16. Procédé selon l'une des revendications 1 à 15, **caractérisé en ce que** ledit alliage de zirconium ou de hafnium est un alliage utilisable dans la fabrication des composants utilisés dans des réacteurs nucléaires.

17. Procédé selon la revendication 16, **caractérisé en ce que** ledit alliage est un alliage de zirconium comportant comme éléments d'addition au moins de l'étain, du fer, du chrome et de l'oxygène.

18. Procédé selon la revendication 17, **caractérisé en ce que** ledit alliage comporte également du nickel.

19. Procédé selon la revendication 17 ou 18, **caractérisé en ce que** ledit alliage comporte comme élément d'addition au moins du niobium, optionnellement également d'autres éléments tels que de l'oxygène, du fer et/ou de l'étain.

20. Procédé selon l'une des revendications 1 à 16, **caractérisé en ce que** ledit alliage est un alliage de hafnium comportant comme éléments d'addition au moins de l'oxygène et du fer et au plus 2,5%, de préférence 1% au plus, de zirconium résiduel.

21. Composant de réacteur nucléaire à eau légère en alliage de zirconium, **caractérisé en ce qu'**il a été traité superficiellement par le procédé selon l'une des revendications 1 à19.

22. Composant de réacteur nucléaire à eau légère selon la revendication 21, **caractérisé en ce qu'**il s'agit d'un élément pour assemblage de combustible pour réacteur nucléaire à eau légère.

23. Composant de réacteur nucléaire à eau légère en alliage de hafnium, **caractérisée en ce qu'**il a été traité superficiellement par le procédé selon l'une des revendications 1 à 16 et 20.

24. Composant de réacteur nucléaire à eau légère selon la revendication 23, **caractérisé en ce qu'**il s'agit d'un absorbant neutronique de barre de contrôle de réacteur nucléaire.

## Patentansprüche

1. Verfahren zur Oberflächenbehandlung von wenigstens einem Teil einer Legierungskomponente von Zirkonium oder von Hafnium für einen nuklearen Leichtwasserreaktor, **dadurch gekennzeichnet, dass** es wenigstens einen Vorgang der Nanostrukturierung einer Oberflächenschicht der Legierung aufweist, derart, dass der Legierung auf einer Dicke von wenigstens 5µm eine Korngröße kleiner oder gleich 100 nm beschafft wird, wobei besagte Nanostrukturierung bei einer Temperatur kleiner oder gleich der der letzten thermischen Behandlung, welche vorher von besagtem Element während seiner Herstellung erfahren wurde, und mit Hilfe von einem Ultraschall-Strahlverfahren durchgeführt wird.

2. Verfahren gemäß Anspruch 1, **dadurch gekennzeichnet, dass** wenigstens eine der besagten Nanostrukturierungen durch SMAT durchgeführt wird.

3. Verfahren gemäß Anspruch 1 oder 2, **dadurch gekennzeichnet, dass** eine der besagten Nanostrukturierungen durch USSP durchgeführt wird.

4. Verfahren gemäß einem der Ansprüche 1 bis 3, **dadurch gekennzeichnet, dass** es auf der Außen-Oberfläche des besagten Elements ausgeführt wird.

5. Verfahren gemäß einem der Ansprüche 1 bis 4, **dadurch gekennzeichnet, dass** es auf einer Innen-Oberfläche des besagten Elements ausgeführt wird.

6. Verfahren gemäß einem der Ansprüche 1 bis 5, **dadurch gekennzeichnet, dass** man anschließend an wenigstens eine der Nanostrukturierungen oder zur gleichen Zeit wie sie eine Behandlung realisiert, welche die Zusammensetzung der nanostrukturierten Schicht modifiziert, welche bei einer Temperatur kleiner oder gleich der der letzten thermischen Behandlung, welche vorher von besagtem Element während seiner Herstellung erfahren wurde, realisiert wird.

7. Verfahren gemäß Anspruch 6, **dadurch gekennzeichnet, dass** besagte Behandlung, welche die Zusammensetzung von besagter nanostrukturierter Schicht modifiziert, eine thermochemische Behandlung der Diffusion eines oder mehrerer Elemente ist.

8. Verfahren gemäß Anspruch 7, **dadurch gekennzeichnet, dass** besagtes diffundiertes Element Sauerstoff ist.

9. Verfahren gemäß Anspruch 8, **dadurch gekennzeichnet, dass** man die Sauerstoff-Diffusion in einem Ofen unter Ar-O₂- oder Ar-CO₂-Atmosphäre realisiert.

10. Verfahren gemäß Anspruch 8, **dadurch gekennzeichnet, dass** die Sauerstoff-Diffusion in der nanostrukturierten Schicht auf natürliche Weise im Lauf der Verwendung des Elements realisiert wird.

11. Verfahren gemäß Anspruch 7, **dadurch gekennzeichnet, dass** das oder die besagten diffundierten Elemente Kohlenstoff und/oder Stickstoff sind.

12. Verfahren gemäß Anspruch 7, **dadurch gekennzeichnet, dass** das oder die diffundierten Elemente ausgewählt sind aus Erbium, Gadolinium, Europium, Samarium, Dysprosium, Hafnium, Bor und deren Mischungen.

13. Verfahren gemäß Anspruch 7, **dadurch gekennzeichnet, dass** besagtes, diffundiertes Element Chrom ist.

14. Verfahren gemäß einem der Ansprüche 7 bis 13, **dadurch gekennzeichnet, dass** man eine Co-Diffusion oder eine sukzessive Diffusion von mehreren Elementen realisiert.

15. Verfahren gemäß Anspruch 6, **dadurch gekennzeichnet, dass** besagte Behandlung, welche die Zusammensetzung von besagter nanostrukturierter Schicht modifiziert, eine Behandlung der chemischen Gasphasenabscheidung eines oder mehrerer Elemente ist.

16. Verfahren gemäß einem der Ansprüche 1 bis 15, **dadurch gekennzeichnet, dass** besagte Legierung von Zirkonium oder von Hafnium eine Legierung ist, verwendbar in der Herstellung von Elementen, welche in Nuklearreaktoren verwendet werden.

17. Verfahren gemäß Anspruch 16, **dadurch gekennzeichnet, dass** besagte Legierung eine Legierung von Zirkonium ist, welche als Additivelemente wenigstens Zinn, Eisen, Chrom und Sauerstoff aufweist.

18. Verfahren gemäß Anspruch 17, **dadurch gekennzeichnet, dass** besagte Legierung ebenfalls Nickel aufweist.

19. Verfahren gemäß Anspruch 17 oder 18, **dadurch gekennzeichnet, dass** besagte Legierung als Additionselement wenigstens Niob, optional ebenfalls andere Elemente wie Sauerstoff, Eisen und/oder Zinn aufweist.

20. Verfahren gemäß einem der Ansprüche 1 bis 16, **dadurch gekennzeichnet, dass** besagte Legierung eine Legierung von Hafnium ist, welche als Additionselemente wenigstens Sauerstoff und Eisen und höchstens 2,5%, vorzugsweise höchstens 1%, restliches Zirkonium aufweist.

21. Komponente für nuklearen Leichtwasserreaktor aus einer Legierung von Zirkonium, **dadurch gekennzeichnet, dass** sie oberflächlich durch das Verfahren gemäß einem der Ansprüche 1 bis 19 behandelt wurde.

22. Nuklearer-Leichtwasserreaktor-Komponente gemäß Anspruch 21, **dadurch gekennzeichnet, dass** es sich um ein Element zur Brennstoffanordnung für den nuklearen Leichtwasserreaktor handelt.

23. Komponente für nuklearen Leichtwasserreaktor aus einer Legierung von Hafnium, **dadurch gekennzeichnet, dass** sie oberflächlich durch das Verfahren gemäß einem der Ansprüche 1 bis 16 und 20 behandelt wurde.

24. Nuklearer-Leichtwasserreaktor-Komponente gemäß Anspruch 23, **dadurch gekennzeichnet, dass** es sich um ein Neutronen-Absorptionsmittel des Steuerstabs des Nuklearreaktors handelt.

## Claims

1. Method for surface processing at least a portion of a component of zirconium or hafnium alloy for light water nuclear reactor, **characterised in that** it comprises at least one operation of nanostructuring a surface layer of the alloy so as to confer on the alloy over a thickness of at least 5 µm a grain size which is less than or equal to 100 nm, the nanostructuring being carried out at a temperature which is less than or equal to that of the last thermal processing operation to which the component was previously subjected during its production, and by means of an ultrasonic peening method.

2. Method according to claim 1, **characterised in that** at least one of the nanostructurings is carried out by SMAT.

3. Method according to claim 1 or claim 2, **characterised in that** at least one of the nanostructurings is carried out by USSP.

4. Method according to any one of claims 1 to 3, **characterised in that** it is carried out on the external surface of the component.

5. Method according to any one of claims 1 to 4, **characterised in that** it is carried out on an internal surface of the component.

6. Method according to any one of claims 1 to 5, **characterised in that** there is carried out, after at least one of the nanostructurings or at the same time as it, a processing operation which modifies the composition of the nanostructured layer and which is carried out at a temperature which is less than or equal to that of the last thermal processing operation to which the component was previously subjected during its production.

7. Method according to claim 6, **characterised in that** the processing operation modifying the composition of the nanostructured layer is a thermochemical processing operation for diffusion of one or more elements.

8. Method according to claim 7, **characterised in that** the diffused element is oxygen.

9. Method according to claim 8, **characterised in that** the diffusion of oxygen is carried out in an oven under an atmosphere of Ar-O₂ or Ar-CO₂.

10. Method according to claim 8, **characterised in that** the diffusion of oxygen in the nanostructured layer is carried out naturally during use of the component.

11. Method according to claim 7, **characterised in that** the diffused element(s) is/are carbon and/or nitrogen.

12. Method according to claim 7, **characterised in that** the diffused element(s) is/are selected from erbium, gadolinium, europium, samarium, dysprosium, hafnium, boron or admixtures thereof.

13. Method according to claim 7, **characterised in that** the diffused element is chromium.

14. Method according to any one of claims 7 to 13, **characterised in that** codiffusion or successive diffusion of a plurality of elements is carried out.

15. Method according to claim 6, **characterised in that** the processing operation modifying the composition of the nanostructured layer is a processing operation for chemical vapour deposition of one or more elements.

16. Method according to any one of claims 1 to 15, **characterised in that** the zirconium or hafnium alloy is an alloy which can be used in the production of the components used in nuclear reactors.

17. Method according to claim 16, **characterised in that** the alloy is a zirconium alloy comprising, as addition elements, at least tin, iron, chromium and oxygen.

18. Method according to claim 17, **characterised in that** the alloy also comprises nickel.

19. Method according to claim 17 or claim 18, **characterised in that** the alloy comprises, as an addition element, at least niobium, optionally also other elements, such as oxygen, iron and/or tin.

20. Method according to any one of claims 1 to 16, **characterised in that** the alloy is a hafnium alloy comprising, as addition elements, at least oxygen and iron and a maximum of 2.5%, preferably a maximum of 1%, of residual zirconium.

21. Component of zirconium alloy for light water nuclear reactor, **characterised in that** it has been surface processed by the method according to any one of claims 1 to 19.

22. Component for light water nuclear reactor according to claim 21, **characterised in that** it is an element for a fuel assembly for a light water nuclear reactor.

23. Component for light water nuclear reactor of hafnium alloy, **characterised in that** it has been surface processed by the method according to any one of claims 1 to 16 and 20.

24. Component for light water nuclear reactor according to claim 23, **characterised in that** it is a neutron absorbent for a control rod of a nuclear reactor.
